(19) Europäisches Patentamt
European Patent Office
Office européen des brevets

(11) Veröffentlichungsnummer: **0 026 312**
**B1**

(12) **EUROPÄISCHE PATENTSCHRIFT**

(45) Veröffentlichungstag der Patentschrift: **23.11.83**

(51) Int. Cl.³: **C 07 D 405/14,** C 08 G 59/26, C 09 D 3/58, C 09 J 3/16

(21) Anmeldenummer: **80104882.8**

(22) Anmeldetag: **16.08.80**

(54) **1,2,4-Triglycidyl-triazolidin-3,5-dione, Verfahren zu ihrer Herstellung und ihre Verwendung.**

(30) Priorität: **01.09.79 DE 2935354**

(43) Veröffentlichungstag der Anmeldung: **08.04.81 Patentblatt 81/14**

(45) Bekanntmachung des Hinweises auf die Patenterteilung: **23.11.83 Patentblatt 83/47**

(84) Benannte Vertragsstaaten: **CH DE FR GB IT LI**

(56) Entgegenhaltungen:
**DD - A - 118 641**
**DE - A - 1 954 531**
**DE - B - 1 670 439**

**Die Akte enthält technische Angaben, die nach dem Eingang der Anmeldung eingereicht wurden und die nicht in dieser Patentschrift enthalten sind.**

(73) Patentinhaber: **BAYER AG, Zentralbereich Patente, Marken und Lizenzen, D-5090 Leverkusen 1, Bayerwerk (DE)**

(72) Erfinder: **Rottmaier, Ludwig, Bergstrasse 85, D-5068 Odenthal-Glöbusch (DE)**
Erfinder: **Merten, Rudolf, Dr., Berta-von-Suttner-Strasse 55, D-5090 Leverkusen (DE)**

**EP 0 026 312 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# 1,2,4-Triglycidyl-triazolidin-3,5-dione, Verfahren zu ihrer Herstellung und ihre Verwendung

Die vorliegende Erfindung betrifft neue 1,2,4-Triglycidyl-triazolidin-3,5-dione der allgemeinen Formel I

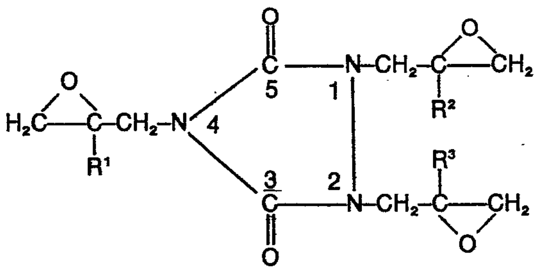

(I)

worin

$R^1$, $R^2$ und $R^3$ gleich oder verschieden ein Wasserstoffatom oder eine Methylgruppe, vorzugsweise ein Wasserstoffatom, bedeuten, Verfahren zu ihrer Herstellung und ihre Verwendung.

Die erfindungsgemässen 1,2,4-Triglycidyl-triazolidin-3,5-dione der allgemeinen Formel (I) werden erhalten, indem man Triazolidin-3,5-dion der Formel (II)

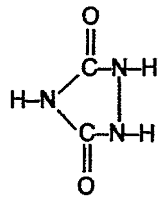

(II)

mit einem Epihalogenhydrin oder β-Methylhalogenhydrin wie z. B. Epichlorhydrin, Epibromhydrin oder β-Methylepichlorhydrin, gegebenenfalls in Gegenwart eines geeigneten Katalysators, oder mit 1,3-Dihalogenhydrinpropan in Gegenwart Halogenwasserstoff abspaltender Mittel in an sich bekannter Weise umsetzt und anschliessend durch Behandlung mit Halogenwasserstoffakzeptoren Halogenwasserstoff abspaltet. Die Herstellung der 1,2,4-Triglycidyl-triazolidin-3,5-dione kann auch einstufig durch Umsetzung des Triazolidin-3,5-dions mit einem Epihalogenhydrin oder 1,3-Dihalogenhydrinpropan in Gegenwart Halogenwasserstoff abspaltender Mittel, wie Natrium- oder Kaliumhydroxid, erfolgen.

Aus der DE-OS 1 954 531 sind Triglycidylisocyanurate bekannt, in denen mindestens eine der Glycidylgruppen eine β-Methylglycidylgruppe ist. Bei der Härtung mit üblichen Härtern sollen diese Verbindungen gegenüber Triglycidylisocyanurat bei gleich guten Eigenschaften der Härtungsprodukte überraschende verarbeitungstechnische Vorteile bieten. Vergleicht man Triglycidylisocyanurat mit 1,2,4-Triglycidyl-triazolidin-3,5-dion, einer erfindungsgemässen Verbindung, in Pulverlackbindemitteln, in denen saure Polyester bzw. Carboxylpolyacrylate als Härter fungieren, so stellt man nicht nur bessere Verarbeitungseigenschaften im Falle der erfindungsgemässen Verbindung fest, sondern auch eine höhere Glanzbeständigkeit der mit 1,2,4-Triglycidyl-triazolidin-3,5-dion gehärteten Lackfilme. Weitere Vorteile sind eine höhere thermische Beständigkeit sowie ein höherer Weissgrad im Falle pigmentierter Beschichtungen (vergl. Europ. Patentanmeldung 80 104 937.0; veröffentlicht unter Nr. 0 024 680).

Ferner war die glatte Bildung der erfindungsgemässen 1,2,4-Triglycidyl-triazolidin-3,5-dione nicht zu erwarten. Es ist nämlich aus der DD-PS 118 641 bekannt, dass die strukturell vergleichbare Verbindung das Maleinsäurehydrazid, das wie die erfindungsgemäss eingesetzten 1,2,4-Triazolidin-3,5-dione eine cyclische Hydrazodicarbonylgruppe enthält, mit überschüssigem Epichlorhydrin in Gegenwart von Alkali lediglich in das 0-substituierte Monoepoxid überführt werden. Im wesentlichen gleiche Ergebnisse werden erhalten, wenn Maleinsäurehydrazid gemäss den Bedingungen des Beispiels 1 der vorliegenden Anmeldung eingesetzt wird.

Das zur Herstellung der neuen 1,2,4-Triglycidylverbindungen der allgemeinen Formel (I) verwendete Triazolidin-3,5-dion ist aus der Literatur bekannt und kann z. B. durch Erhitzen auf über 200 °C aus Hydrazin-N,N′-dicarbonsäurediamid unter Ammoniakabspaltung erhalten werden.

Beim bevorzugt verwendeten zweistufigen Verfahren wird in einer ersten Stufe Triazolidin-3,5-dion mit einem Epihalogenhydrin in Anwesenheit von basischen, sauren oder neutralen Katalysatoren zur Halogenhydrinverbindung der allgemeinen Formel (III)

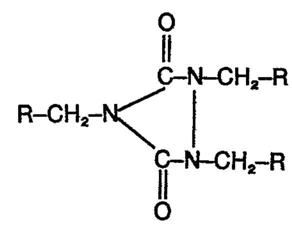

(III)

in der die Reste R in 1,2-Epoxyethylreste umwandelbare Reste bedeuten, umgesetzt.

Ein solcher in einen 1,2-Epoxyethylrest umwandelbarer Rest R ist vor allem ein an verschiedenen Kohlenstoffatomen funktionelle Gruppen tragender Hydroxyhalogenethylrest wie die 2-Chlor-1-hydroxy- oder 2-Methyl-2-chlor-1-hydroxyethylreste.

Vorzugsweise verwendet man bei der Addition des Halogenhydrins als Katalysatoren tertiäre Amine und/oder quaternäre Ammoniumsalze wie Trimethylbenzylammoniumhydroxid, Tetraethylammoniumchlorid, Trimethylbenzylammoniumchlorid und Trimethyl-phenylammoniumchlorid; Triethylamin, Tri-n-butylamin, Triethanolamin, N,N′-Dimethylanilin, Benzyldimethylamin, Pyridin, Endoethylenpiperazin und N,N′-Dimethylpiperazin.

Ferner sind auch handelsübliche basische Ionenaustauscherharze mit tertiären oder quaternären Aminogruppen sowie mit Säureamidgruppen geeignet.

Als Katalysatoren sind auch niedermolekulare Thioether und/oder deren Sulfoniumsalze wie Diethylsulfid, Dibenzylsulfid, β-Hydroxyethyl-ethylsulfid, Thiodiglykol und Dibenzyl-methylsulfonium-bromid bzw. Verbindungen, welche mit Epihalogenhydrin in Thioether oder deren Sulfoniumverbindungen übergehen können, wie beispielsweise Schwefelwasserstoff, Natriumsulfid oder Mercaptane zu verwenden.

Es können jedoch auch Alkalimetall- und Erdalkalimetallsalze wie Lithiumchlorid und Calciumrhodanid eingesetzt werden.

Die Menge an Katalysator liegt vorzugsweise zwischen 0,01 und 5 Mol.-%, bezogen auf Triazolidin-3,5-dion.

Die Halogenhydrinverbindung der allgemeinen Formel (III) kann auch hergestellt werden durch die Umsetzung von Triazolidin-3,5-dion mit Dihalogenhydrinpropan wie 1,3-Dichlorpropanol-2 oder 2-Methyl-1,3-dichlorpropanol-2 in Gegenwart von Halogenwasserstoff abspaltenden Mitteln wie Alkali- oder Erdalkalihydroxide, z.B. Natrium- und Bariumhydroxid, Alkali- oder Erdalkalicarbonate, z.B. Soda und Calciumcarbonat und tertiäre Amine wie Triethylamin.

Die Reaktion des Triazolidin-3,5-dions mit dem Epihalogenhydrin wird mit mindestens äquivalenten Mengen an Epihalogenhydrin durchgeführt, d.h. ein Mol Triazolidin-3,5-dion werden mit mindestens 3 Mol Epihalogenhydrin zur Reaktion gebracht. Vorzugsweise wird jedoch ein Überschuss an Apihalogenhydrin, und zwar 4 bis 60 Mol, besonders bevorzugt 10 bis 30 Mol Epihalogenhydrin pro Mol Triazolidin-3,5-dion, verwendet. Aus wirtschaftlichen Gründen wird man die Menge an Epihalogenhydrin natürlich so niedrig wie möglich halten.

Die Reaktion zwischen Triazolidin-3,5-dion und Epihalogenhydrin wird bei 20 bis 200 °C, vorzugsweise bei 50 bis 160 °C, gegebenenfalls unter erhöhtem Druck, durchgeführt.

Die Reaktionszeiten liegen im allgemeinen zwischen 30 Minuten und mehreren Tagen, können in besonderen Fällen jedoch auch darüber oder darunter liegen. Durch entsprechende Wahl der Reaktionsbedingungen, z.B. Druck, werden kürzere Reaktionszeiten erreicht.

Prinzipiell kann die Umsetzung des Triazolidin-3,5-dions mit dem Epihalogenhydrin oder β-Methylhalogenhydrin auch ohne Zusatz von Katalysatoren durchgeführt werden, jedoch sind dann höhere Temperaturen und/oder längere Reaktionszeiten als vorstehend angegeben, erforderlich.

Anschliessend wird in einer zweiten Stufe die Halogenhydrinverbindung, in erster Linie das Trichlorhydrintriazolidin-3,5-dion, das jedoch je nach Epihalogenhydrin-oder β-Methylhalogenhydrinüberschuss bereits gewisse Mengen an Glycidylverbindungen enthalten kann, mittels Halogenwasserstoff-abspaltender Verbindungen zum 1,2,4-Triglycidyl-triazolidin-3,5-dion dehydrohalogeniert.

Die zur Halogenwasserstoffabspaltung eingesetzten alkalisch reagierenden Verbindungen sind insbesondere Alkali- oder Erdalkalimetallhydroxide wie Natriumhydroxid, Kaliumhydroxid, Calciumhydroxid, vorzugsweise Natriumhydroxid. Dies kann in fester Form oder in Lösung, vorzugsweise in 20–50%igen Lösungen, eingesetzt werden.

Ferner können zur Halogenwasserstoffabspaltung Alkalicarbonate, insbesondere Soda und Kaliumcarbonat in fester oder gelöster Form, Alkalisilikate, Alkaliphosphate und Alkalialuminate sowie überschüssiges Epihalogenhydrin, oder 1,2-Alkylenoxide, wie Ethylenoxid Verwendung finden, wobei bei Verwendung von Epichlorhydrin dieses in Glycerindichlorhydrin umgewandelt wird.

Auf ein Mol des Halogenhydrins des Triazolidin-3,5-dions der Formel III werden 3 bis 3,5 Äquivalente der Halogenwasserstoff abspaltenden Verbindungen eingesetzt.

Zweckmässig soll bei der Halogenwasserstoffabspaltung der pH-Wert nicht über 13, vorzugsweise nicht über pH 11 ansteigen. Um dies zu erreichen, setzt man das Alkali nach und nach zu bzw. tropft die Lösung allmählich zu und kontrolliert dabei den pH-Wert der Reaktionsmischung.

Die Halogenwasserstoffabspaltung kann im Temperaturbereich von 20 bis 120 °C erfolgen. Wird die Halogenwasserstoffabspaltung mit Alkali, z.B. Kalilauge, durchgeführt, so ist zur Erzielung optimaler Ausbeuten eine Reaktionstemperatur von 70 °C nicht zu überschreiten. Die besten Ergebnisse werden bei Temperaturen um 30 bis 35 °C erhalten. Bei Einsatz von Alkalicarbonaten sollte die Reaktionstemperatur jedoch über 70 °C liegen, wobei die Höchstgrenze in der Regel durch die Siedetemperatur des überschüssigen Epihalogenhydrins vorgegeben ist.

Bei der Dehydrohalogenierung ist es vorteilhaft, ein mit Wasser nicht mischbares organisches Lösungsmittel zuzusetzen, um das bei der Reaktion entstehende bzw. das über die Alkalilösung zugetropfte Wasser azeotrop entfernen zu können. Die Mengen an zugesetztem Lösungsmittel sind nicht kritisch. Geeignete Lösungsmittel sind chlorierte Kohlenwasserstoffe wie Methylenchlorid, Chloroform, Ethylenchlorid oder Trichlorethylen. Sofern für die Bildung der Triazolidin-3,5-dionchlorhydrinverbindungen ein grosser Überschuss an Epihalogenhydrin eingesetzt wurde, kann das überschüssige Epihalogenhydrin als mit Wasser nicht mischbares Lösungsmittel fungieren.

Eine besonders bevorzugte Ausführungsform besteht darin, dass man Triazolidin-3,5-dion mit Epihalogenhydrin, vorzugsweise Epichlorhydrin, in Gegenwart eines Katalysators, vorzugsweise eines tert. Amins, einer quaternären Ammoniumbase, eines quaternären Ammoniumsalzes oder eines organischen Sulfids bzw. Sulfoniumsalzes, in einer ersten Stufe umsetzt und das dabei entstandene Halogenhydringruppen enthaltende Triazolidin-3,5-dion in einer 2. Stufe mit Halogenwasserstoff abspaltenden Verbindungen, insbesondere Alkali-, Erdalkalihydroxiden oder Alkalicarbonaten in fester oder gelöster Form behandelt.

Die Aufarbeitung der 1,2,4-Triglycidyl-triazolidin-3,5-dione erfolgt in der Regel so, dass das bei der Halogenwasserstoffabspaltung entstehende Nebenprodukt, z. B. Kochsalz bei Verwendung von Natronlauge als Säurefänger, durch Absaugen entfernt wird. Eventuell noch vorhandene Kochsalz- und Alkalireste werden durch Auswaschen mit Wasser entfernt. Selbstverständlich kann jedoch auch das gesamte Kochsalz und eventuell vorhandene Alkalireste ohne vorheriges Absaugen durch Auswaschen mit Wasser entfernt werden. Die verbleibende Lösung wird dann gegebenenfalls nach dem Trocknen über einem geeigneten Trocknungsmittel wie wasserfreiem Natriumsulfat, vom Lösungsmittel, z. B. überschüssigem Epichlorhydrin, welches in den nächsten Ansätzen wieder mitverwendet werden kann, gegebenenfalls im Vakuum entfernt, und das erhaltene hellgelb bis gelb gefärbte viskose Öl wird durch Auflösen in geeigneten Lösungsmitteln wie $C_1$–$C_4$-Alkanolen, vorzugsweise Methanol, Ketonen wie Butanon, Glykol- bzw. Diglykolmonoether oder deren Acetate wie Ethylen-glykolmonomethylether, Diethylen-glykolmonoethylether und Ethylenglykolmonomethyletheracetat und nachfolgendem Abkühlen zur Kristallisation gebracht.

Die erhaltene kristalline Verbindung, ein praktisch reines 1,2,4-Triglycidyl-triazolidin-3,5-dion, wird abgesaugt und kann gegebenenfalls durch Umkristallisieren, z. B. aus Methanol, nochmals gereinigt werden. Häufig kann jedoch auf eine Reinigung verzichtet und das Rohprodukt sofort weiterverarbeitet werden.

Die erfindungsgemäss erhaltenen 1,2,4-Triglycidyl-triazolidin,3,5-dione (Rohprodukte) besitzen Epoxidwerte von 0,6 bis 1,13, vorzugsweise 0,85 bis 1,13. Unter Epoxidwert wird die Anzahl von Epoxidäquivalenten verstanden, die in 100 g Substanz enthalten ist. Das Epoxidäquivalent ist definiert als die Grammenge Substanz, in der eine 1,2-Epoxidgruppe enthalten ist. Eine 1,2-Epoxidgruppe ist einem Mol Halogenwasserstoff äquivalent.

Das reine 1,2,4-Triglycidyl-triazolidin-3,5-dion (Formel I $R^1$, $R^2$, $R^3$ = H) besitzt einen Epoxidwert von 1,13. Niedrigere Epoxidwerte deuten auf einen Gehalt an oligomeren Produkten, d.h., höhermolekularen Anteilen, hin. So enthält beispielsweise ein 1,2,4-Triglycidyl-triazolidin-3,5-dion mit einem Epoxidwert von 0,93 gemäss Beispiel 1 ca. 80 Gew.-% reine Verbindung der Formel I ($R^1$, $R^2$, $R^3$ = H Fp: 103–104 °C). Die oligomeren Produkte werden durch Reaktion der aktiven, an Stickstoff gebundene Wasserstoffatome des 1,2,4-Triazolidin-3,5-dions, des Mono- oder Diglycidyl-triazolidin-3,5-dions oder deren Mischungen mit den 1,2-Epoxidgruppen (= Glycidylgruppen) des Mono-, Di- oder Triglycidyl-triazolidin-3,5-dions bzw. deren Mischungen und/oder mit den Halogenhydringruppen der vorgenannten Glycidyl-triazolidin-3,5-dione gebildet. Von der Herstellung her können die Polyglycidylverbindungen des 1,2,4-Triazolidin-3,5-dions noch verseifbares Halogen (bis ca. 5 Gew.-% Chlor bzw. ca. 13 Gew.-% Brom) enthalten, das durch weitere Behandlung mit Halogenwasserstoff abspaltende Mittel, falls gewünscht, praktisch vollständig entfernt werden kann und zumindest teilweise den Gehalt an Epoxidgruppen erhöht.

Die erfindungsgemäss hergestellten Polyglycidylverbindungen können allein oder zusammen mit üblichen Härtungsmitteln, wie z. B. Polyamine, Polycarbonsäuren und deren Anhydride, Polyamidamine, Polyphenole, Aminoplast- und Phenoplastharzen (Resolharzen), Bortrifluoridkomplexen usw. als Imprägnierungsmittel für Textilien, z. B. Fasern aus Polyester, als Überzugsmittel, z. B. für Anstrichzwecke auf Glas, Metallen und Holz, als Klebemittel für Kunststoffe verschiedenster Art, z. B. zum Verkleben von ungewebten textilartigen Gebilden, sowie zur Herstellung von Formkörpern, z. B. Giess-, Presskörpern und Laminaten, verwendet werden.

Die nachfolgenden Beispiele sollen die Erfindung näher erläutern, wobei, wenn nicht anders angegeben, die Prozente und Teile sich auf das Gewicht beziehen.

Beispiel 1

In einem 4-l-Dreihalskolben, der mit Rührer, Thermometer und Rückflusskühler ausgestattet ist, werden 101 g (1 Mol) Triazolidin-3,5-dion, 2775 g (30 Mol) Epichlorhydrin und 2 ml Triethylamin mittels Ölbad auf 80 °C erwärmt. Die Mischung reagiert exotherm, so dass das Ölbad entfernt werden kann. Nach dem Abklingen der exothermen Reaktion wird bei 80 °C weitergerührt. Die gesamte Reaktionszeit beträgt 10 Stunden bei 80 °C. Zu der erhaltenen Lösung werden bei 30 bis 40 °C 250 g 50%ige Natronlauge innerhalb 4 Stunden so zugetropft, dass das zugegebene und das bei der Reaktion entstehende Wasser durch azeotrope Destillation bei 30 bis 60 Torr mittels Wasserabscheider laufend entfernt wird. Zur vollständigen Reaktion wird noch eine Stunde nachgerührt und das entstandene Kochsalz durch Filtration abgetrennt. Das Kochsalz wird 2mal mit 200 g Epichlorhydrin gewaschen und die vereinigten Epichlorhydrinlösungen werden mit 200 ml Wasser ausgewaschen. Nach dem Trocknen der organischen Phase über Natriumsulfat wird das Lösungsmittel durch Einengen am Rotationsverdampfer entfernt und der Rückstand zuletzt bei 80 °C und 0,2 mbar bis zur Gewichtskonstanz getrocknet. Es werden 240 g eines hellbraunen, viskosen Öls erhalten, dessen Epoxidwert mit 0,93 bestimmt wurde und dessen Chlorgehalt = 2,75% Gesamtchlor beträgt. Das viskose Öl kristallisiert nach einigen Stunden bis Tagen durch. Durch Auflösen in Methanol und nachfolgendem Abkühlen auf 5 °C kristallisiert das praktisch reine 1,2,4-Triglycidyl-triazolidin-3,5-dion vom Fp. = 98–103 °C aus.

IR- und NMR-Spektren sowie Elementaranlyse und Epoxidbestimmung bestätigen die angenommene Struktur gemäss Formel I ($R^1$, $R^2$, $R^3$ = H).

| | | | |
|---|---|---|---|
| berechnet: | C 49,1% | H 5,57% | N 15,6% |
| gefunden: | C 49,0% | H 5,6 % | N 15,5% |
| berechnet: | Epoxidwert = 1,13% | | |
| gefunden: | Epoxidwert = 1,10% | | |

Beispiel 2

In einem 60-l-Kessel, der mit Rührer, Thermometer und Rückflusskühler ausgestattet ist, werden 50 kg Epichlorhydrin, 4,04 kg Triazolidin-3,5-dion und 80 g Tetraethylammoniumchlorid 10 Stunden bei 80 °C gerührt, wobei zwischendurch gekühlt werden muss. Zu dieser entstandenen klaren Lösung werden dann innerhalb 6 Stunden bei 30 °C 5 kg pulverisiertes Ätznatron portionsweise zugesetzt und 2 Stunden bei 30 °C nachgerührt. Das entstandene Kochsalz wird abgesaugt, die organische Phase im Vakuum bei 60 °C eingeengt und der erhaltene Rückstand, zuletzt bei 60 °C und 0,2 mbar, getrocknet. Es werden 9,2 kg eines hellbraunen viskosen Öls mit einem Epoxidwert von 0,95 und einem Chlorgehalt von 2,3% Gesamtchlor erhalten, welches innerhalb weniger Stunden zu einer festen Masse erstarrte, aus der durch Umkristallisieren aus Methanol das reine 1,2,4-Triglycidyl-triazolidin-3,5-dion erhältlich ist.

Beispiel 3

40 kg Epichlorhydrin, welches aus dem Beispiel 2 zurückgewonnen wurde, werden mit 4,04 kg Triazolidin-3,5-dion und 80 g Tetraethylammoniumchlorid analog Beispiel 2 umgesetzt und weiter aufgearbeitet. Es werden 9,35 kg eines bräunlichen Öls erhalten, das nach wenigen Stunden erstarrt und das einen Epoxidwert von 0,93 und einen Chlorgehalt von 3,1% aufweist.

Beispiel 4

1400 g Epichlorhydrin, 202 g Triazolidin-3,5-dion und 4 g Tetraethylammoniumchlorid werden analog Beispiel 1 10 Stunden bei 80 °C umgesetzt. Die erhaltene Lösung wird bei 30 °C mit 246 g pulverisiertem Ätznatron innerhalb 6 Stunden portionsweise versetzt und 2 Stunden bei 30 °C nachgerührt. Das entstandene Kochsalz wird durch Absaugen abgetrennt und die organische Phase mit 100 ml Wasser ausgeschüttelt und eingeengt. Nach dem Trocknen, zuletzt bei 60 °C und 0,2 mbar, werden 436 g Rückstand erhalten, der innerhalb weniger Stunden zu einer festen, fast weissen Masse mit einem Epoxidwert von 0,93 und einem Chlorgehalt von 4,6% Gesamtchlor erstarrt.

Beispiel 5

202 g Triazolidin-3,5-dion, 740 g Epichlorhydrin und 4 g Tetraethylammoniumchlorid werden analog Beispiel 4 10 Stunden bei 80 °C umgesetzt. Die erhaltene Lösung wird mit 500 ml Methylenchlorid verdünnt, portionsweise innerhalb 6 Stunden bei 30 °C mit 246 g pulverisiertem Ätznatron versetzt und 2 Stunden bei 30 °C nachgeführt. Der Rückstand wird abgesaugt, die organische Phase mit 100 ml Wasser ausgeschüttelt und eingeengt. Nach dem Trocknen, zuletzt bei 60 °C und 0,2 mbar, werden 338 g eines fast farblosen Öls mit einem Epoxidwert von 0,99 und einem Chlorgehalt von 3,5% Gesamtchlor erhalten, welches beim Abkühlen zu einer festen, praktisch weissen Masse erstarrt. Durch zweimaliges Umkristallisieren aus Methanol wird reines 1,2,4-Triglycidyl-triazolidin-3,5-dion (Formel I, $R^1$, $R^2$, $R^3$ = H) vom Schmelzpunkt Fp. = 103 bis 104 °C erhalten, dessen Epoxidwert 1,13 beträgt.

Beispiel 6

200 g des nach Beispiel 5 erhaltenen rohen Triglycidyl-triazolidin-3,5-dions mit einem Epoxidwert von 0,99 und einem Chlorgehalt von 3,5% Gesamtchlor werden in 300 g Methylenchlorid gelöst. Zu dieser Lösung wird bei Rückfluss des Methylenchlorids langsam die berechnete Natriumhydroxidmenge als 45%ige wässrige Lösung zugetropft, wobei das Wasser über einen Wasserabscheider durch azeotrope Destillation laufend entfernt wird. Nach Beendigung der Reaktion wird der Rückstand abgesaugt, die organische Phase mit einer primären Natriumphosphatlösung ausgewaschen und eingeengt, zuletzt bei 80 °C/0,3 mbar. Es resultieren 186 g eines hellgelben Öls mit einem Epoxidwert von 1,01 und einem Chlorgehalt von 0,6% Gesamtchlor, welches beim Abkühlen zu einer festen Masse erstarrt.

Beispiel 7

100 g 1,2,4-Triglycidyl-triazolidin-3,5-dion und 171 g Hexahydrophthalsäureanhydrid werden getrennt aufgeschmolzen, bei 110 °C vermischt und in eine Form gegossen. Nach der Härtung von 4 Std. bei 80 °C und 16 Std. bei 160 °C werden Prüfkörper hergestellt und folgende Eigenschaften erhalten:

| | |
|---|---|
| Biegefestigkeit nach DIN 53 452, in N/mm² | 148 |
| Durchbiegung nach DIN 53 452, in mm | 3,2 |
| Schlagzähigkeit nach DIN 53 453, in kJ/m² | 11,8 |
| Kugeldruckhärte nach DIN 53 456, in n/mm² | 240 |
| Martensgrad nach DIN 53 458, in °C | 183 |

**Patentansprüche**

1. Triglycidyl-triazolidin-3,5-dion der Formel I

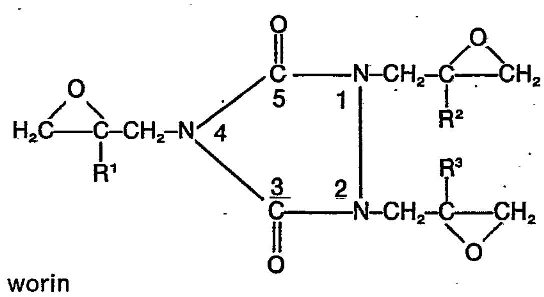

(I)

worin

$R^1$, $R^2$ und $R^3$ gleich oder verschieden ein Wasserstoffatom oder eine Methylgruppe, vorzugsweise ein Wasserstoffatom, bedeuten.

2. Triglycidyl-triazolidin-3,5-dion gemäss Anspruch 1 mit einem Gehalt an oligomeren Nebenprodukten, die bei der Herstellung des Triglycidyltriazolidin-3,5-dions bei der Umsetzung aus 1,2,4-Triazolidin-3,5-dion mit mindestens der äquivalenten Menge an Epihalogenhydrinen oder β-Methyl-epihalogenhydrinen und anschliessender Behandlung des Reaktionsproduktes mit Halogenwasserstoff abspaltenden Mitteln gebildet werden.

3. Verfahren zur Herstellung von Triglycidyl-triazolidin-3,5-dion gemäss Ansprüchen 1 und 2, dadurch gekennzeichnet, dass 1,2,4-Triazolidin-3,5-dion mit mindestens der äquivalenten Menge an Epihalogenhydrinen oder β-Methyl-epihalogenhydrinen, gegebenenfalls in Gegenwart eines Katalysators, zu den entsprechenden Tri-(halogenhydrinen) des Triazolidin-3,5-dions umgesetzt und anschliessend die Halogenhydringruppen mit Halogenwasserstoff abspaltenden Mitteln in Epoxidgruppen überführt werden, und das erhaltene Rohprodukt des 1,2,4-Triglycidyl-triazolidin-3,5-dions gegebenenfalls umkristallisiert wird.

4. Verfahren gemäss Anspruch 3, dadurch gekennzeichnet, dass als Epihalogenhydrin Epichlorhydrin verwendet wird.

5. Verfahren gemäss Anspruch 3, dadurch gekennzeichnet, dass pro Mol 1,2,4-Triazolidin-3,5-dion 4 bis 60 Mol Epichlorhydrin eingesetzt werden.

6. Verwendung der Triglycidyl-triazolidin-3,5-dione gemäss den Ansprüchen 1 und 2 in Kombination mit üblichen Härtungsmitteln zur Herstellung von Imprägnier-, Überzugs-, Beschichtungs- und Klebemitteln, sowie Laminaten und Formkörpern.

**Claims**

1. Triglycidyl-triazolidine-3,5-dione of the formula I

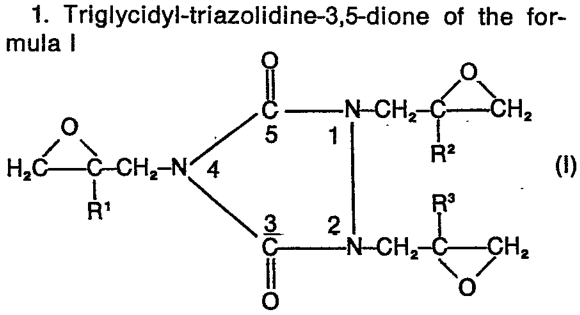

(I)

wherein

$R^1$, $R^2$ and $R^3$ are identical or different and denote a hydrogen atom or a methyl group, preferably a hydrogen atom.

2. Triglycidyl-triazolidine-3,5-dione according to Claim 1 having a content of oligomeric byproducts which are formed during the production of the triglycidyl-triazolidine-3,5-dione by the reaction of 1,2,4-triazolidine-3,5-dione with at least the equivalent amount of epihalohydrins or β-methyl epihalohydrins and subsequent treatment of the reaction product with agents which eliminate hydrogen halide.

3. Process for the preparation of triglycidyl-triazolidine-3,5-dione according to Claims 1 and 2, characterised in that 1,2,4-triazolidine-3,5-dione is reacted with at least the equivalent amount of epihalohydrins or β-methyl epihalohydrins, optionally in the presence of a catalyst, to give the corresponding tri-(halohydrins) of the triazolidine-3,5-dione and then the halohydrin groups are converted into epoxide groups using agents which eliminate hydrogen halide, and the resulting crude product of the 1,2,4-triglycidyl-triazolidine-3,5-dione is optionally recrystallised.

4. Process according to Claim 3, characterised in that the epihalohydrin used is epichlorohydrin.

5. Process according to Claim 3, characterised in that 4 to 60 moles of epichlorohydrin are used per mole of 1,2,4-triazolidine-3,5-dione.

6. Use of the triglycidyl-triazolidine-3,5-diones according to Claims 1 and 2 in combination with conventional hardeners for the production of impregnating, covering and coating compositions, and adhesives, as well as laminates and mouldings.

**Revendications**

1. Triglycidyl-triazolidine-3,5-dione de formule I

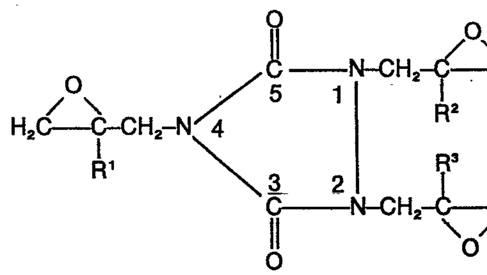

(I)

dans laquelle

$R^1$, $R^2$ et $R^3$ sont identiques ou différents et représentent chacun un atome d'hydrogène ou un groupe méthyle, de préférence un atome d'hydrogène.

2. Triglycidyl-triazolidine-3,5-dione selon la revendication 1 contenant des sous-produits oligomères qui sont formés dans la fabrication de la triglycidyl-triazolidine-3,5-dione par réaction de la 1,2,4-triazolidine-3,5-dione avec au moins la quantité équivalente d'épihalohydrines ou de β-méthyl-épihalohydrines, suivie de traitement du produit de réaction par des agents éliminant les halogénures d'hydrogène.

3. Procédé pour la fabrication de triglycidyl-triazolidine-3,5-dione selon les revendications 1 et 2, caractérisé en ce que l'on fait réagir la 1,2,4-triazolidine-3,5-dione avec au moins la quantité équivalente d'épihalohydrines ou de β-méthyl-épihalohydrines, éventuellement en présence d'un catalyseur, pour obtenir les tri-(halohydrines) correspondantes de la triazolidine-3,5-dione et on transforme ensuite les groupes halohydrine en groupes époxyde avec des agents éliminant l'halogénure d'hydrogène et on recristallise éventuellement le produit brut de la 1,2,4-triglycidyl-triazolidine-3,5-dione ainsi obtenu.

4. Procédé selon la revendication 3, caractérisé en ce que l'on utilise l'épichlorhydrine comme halohydrine.

5. Procédé selon la revendication 3, caractérisé en ce que l'on utilise 4 à 60 moles d'épichlorhydrine par mole de 1,2,4-triazolidine-3,5-dione.

6. Utilisation des triglycidyl-triazolidine-3,5-diones selon les revendications 1 et 2 en combinaison avec des agents durcissants habituels, pour la fabrication de produits d'imprégnation, de revêtement, d'enduction et de colles, ainsi que de stratifiés et de pièces moulées.